Europäisches Patentamt

European Patent Office

Office européen des brevets

(11) Veröffentlichungsnummer : **0 064 201**
**B1**

(12) **EUROPÄISCHE PATENTSCHRIFT**

(45) Veröffentlichungstag der Patentschrift :
30.12.86

(21) Anmeldenummer : 82103241.4

(22) Anmeldetag : 17.04.82

(51) Int. Cl.⁴ : **H 04 L 25/03**

(54) Verfahren zum Entzerren eines Datensignales.

(30) Priorität : 24.04.81 DE 3116266

(43) Veröffentlichungstag der Anmeldung :
10.11.82 Patentblatt 82/45

(45) Bekanntmachung des Hinweises auf die Patenterteilung : 30.12.86 Patentblatt 86/52

(84) Benannte Vertragsstaaten :
BE CH DE FR GB IT LI NL SE

(56) Entgegenhaltungen :
1980 INTERNATIONAL ZURICH SEMINAR ON DIGI-
TAL COMMUNICATIONS, IEEE, Kat. Nr. 80CH1521-4
COM,4.-6. März 1980, Seiten G7.1-G7.6, New York,
USA, J. SPEIDEL: "A new automatic recursive equalizer with improved convergence properties"
1970 INTERNATIONAL CONFERENCE ON COMMUNI-
CATIONS, 8.-10. Juni 1970, Seiten 16-18 bis 16-24, San
Francisco, USA, R.R. BOWEN et al.: "An adaptive
decision feedback equalizer"
IEEE TRANSACTIONS ON COMMUNICATIONS, Band
COM-20, Nr. 5, Oktober 1972, Seiten 857-864, New
York, USA, S.H. RICHMAN: "Dynamic programming
training period for an MSE adaptive equalizer"

(73) Patentinhaber : Felten & Guilleaume Fernmeldeanlagen GmbH
Thurn-und-Taxis-Strasse 10 Postfach 4943
D-8500 Nürnberg 10 (DE)

(72) Erfinder : Speidel, Joachim, Dr.
Hohfeder Strasse 53
D-8500 Nürnberg 20 (DE)

(74) Vertreter : Peuckert, Hermann
Philips Patentverwaltung GmbH Billstrasse 80 Postfach 10 51 49
D-2000 Hamburg 28 (DE)

## Beschreibung

Die Erfindung betrifft ein Verfahren zum Entzerren eines abgetasteten, verrauschten Datensignales gemäß dem Oberbegriff des Patentanspruchs 1.

Bei der Übertragung von elektrischen Signalen, die zur Übermittlung von Information, z. B. von Daten, verwendet werden, tritt zwischen aufeinanderfolgenden Symbolen eine Überlagerungsstörung auf. Zur Entzerrung der Symbole werden getaktete Systeme verwendet, wobei die Entzerrung im Zeitbereich durchgeführt wird. Die meisten herkömmlichen, automatischen und adaptiven Entzerrer sind entscheidungsrückgekoppelt oder sind Transversalfilter, wobei Effekte von Änderungen der Entzerrer-Übertragungsfunktion überwacht und ausgewertet werden. Diese Änderungen in der Übertragungsfunktion werden erzeugt, um so die bestmöglichen Ausgangssignale zu erhalten.

Bei einem automatischen und adaptiven, entscheidungsrückgekoppelten Entzerrer, wie dieser beispielsweise aus 1970 International Conference on Communications 8-10. Juni 1970, Seiten 16-18 bis 16-24 bekannt ist, wird das abgetastete, verrauschte Datensignal der Filtereinrichtung zugeführt. Das Filter enthält einen rekursiven und einen nichtrekursiven Teil. Die Filterkoeffizienten werden iterativ nach dem Gradientenverfahren mit einem konstanten Schrittfaktor eingestellt. Dazu werden beispielsweise das Filterausgangssignal und ein Referenzsignal einer Addierstelle zugeführt. Zwischen dem Referenzsignal und dem Filterausgangssignal wird die Differenz, d. h. der Entzerrungsfehler, gebildet und das kleinste mittlere Fehlerquadrat bestimmt. Eine automatische Entzerrung liegt vor, wenn vor der eigentlichen Datenübertragung ein vereinbartes Signal (Präambel) gesendert wird. Dazu können ein Pseudozufallstext oder einzelne Impulse verwendet werden. Das Referenzsignal kann durch Schätzung (d. h. Entscheidung) des Entzerrer-Ausgangssignales gewonnen (geschätztes Referenzsignal) oder auf der Empfangsseite erzeugt werden (ideales Referenzsignal). Bei der adaptiven Einstellung des Ertzerrers wird keine Präambel gesendet, sondern das Referenzsignal wird geschätzt.

Als Nachteil erweist sich bei einer solchen Schaltungsanordnung die Wahl eines konstanten Schrittfaktors bei der iterativen Einstellung der Filterkoeffiziente mit dem Gradientenverfahren. Für den konstant gewählten Schrittfaktor sind im voraus nur ungenaue Angaben möglich, da dieser im allgemeinen stark von der Kanalcharakteristik abhängig ist. Wird dieser hinreichend klein gewählt, so ist die Konvergenz der Filteranordnung zwar gesichert, aber das Minimum des Entzerrungsfehlers wird nur sehr langsam angenähert. Wird der konstante Schrittfaktor zu groß gewählt, dann divergiert die Entzerrereinstellung. Der Entzerrungsfehler weicht dabei stark vom Minimum ab und die erzielte Entzerrung ist unzureichend.

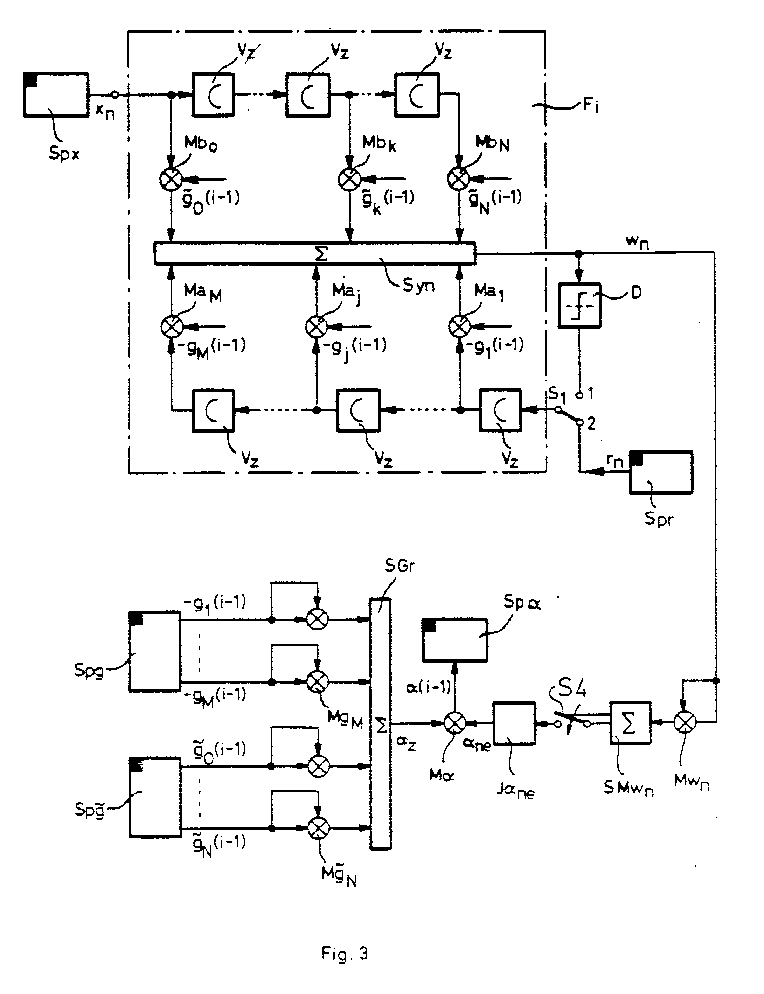

Aus 1980 International Zürich Seminar On Digital Communications, IEEE, Kat. Nr. 80CH1521-4 COM, 4.-6. März 1980, Seite G7.1 bis G7.6 ist ein linearer rekursiver Entzerrer bekannt, welcher durch die Kettenschaltung der gestrichelt umrandeten Filter B(z) und 1/A(z) gebildet wird (siehe Fig. 3a, Seite G7.3). Mit 1/A(z) wird der rekursive Teil bezeichnet und der Entscheider (decision) liegt außerhalb des linearen rekursiven Entzerrers und in Kette mit diesem. Zur Berechnung der Gradienten-Komponenten wird ein Filter A(z) benötigt, welches zusätzlich zum linearen rekursiven Entzerrer erforderlich ist. Zwischen Entscheider (decision) und dem Filter A(z) ist ein Umschalter (Umschaltung zwischen adaptive mode und automatic mode vorgesehen). Bei der automatischen Einstellung des Entzerrers wird vor den eigentlichen Daten ein spezielles, dem Empfänger bekanntes Signal gesendet (Präambel) und der Umschalter befindet sich in der Stellung automatic mode. Weiterhin kann als Referenzsignal auch das Ausgangssignal des Entscheiders verwendet werden und der Umschalter befindet sich in der Stellung adaptive mode.

Zur Einstellung der Gradienten-Komponenten wird das Filter A(z) benötigt, welches einen Schalter, welcher mit $a_o = 1$ bezeichnet ist und von seiner Funktion her die Wirkung eines « Aus-Ein-Schalters » hat. Ist der Schalter $a_o$ geschlossen (in Fig. 3a dargestellt), so werden mittels des Referenzsignals $r_n$ die Gradienten-Komponenten berechnet. Der lineare rekursive Entzerrer mit den Filtern B(z) und 1/A(z) bleibt davon unberührt.

Aufgabe der Erfindung ist es daher, ein Verfahren derart anzugeben, daß die iterative Annäherung an das Minimum des Entzerrungsfehlers innerhalb kurzer Zeit durchführbar ist.

Diese Aufgabe wird erfindungsgemäß durch ein Verfahren mit den Merkmalen des Patentanspruchs 1 gelöst.

Gemäß einer bevorzugten Ausbildungsform der Erfindung werden zu Beginn eines Iterationsintervalls für die Zeit, in der sich der Schalter in der einen Stellung befindet, die Gradientenkoeffizienten nach dem Gradientenverfahren berechnet und abgespeichert. Danach wird der Schalter in die andere Stellung gebracht und die gespeicherten Gradientenkoeffizienten werden der Einrichtung zur Einstellung der Filterkoeffizienten zugeführt. Aus dem Hilfssignal und aus den gespeicherten Gradientenkoeffizienten wird ein variabler Schrittfaktor abgeleitet und gespeichert. Mit dem variablen, gespeicherten Schrittfaktor und den gespeicherten Gradientenkoeffizienten wird für jeden Filterkoeffizienten dessen optimale Einstellung während eines Iterationsintervalls ermittelt.

Dieses Verfahren bringt den Vorteil mit sich, daß die Zahl der benötigten Iterationsintervalle zur Annäherung an das Minimum des Entzerrungsfehlers verkleinert werden kann. Bei der Berechnung des variablen Schrittfaktors kann die Filteranordnung im Multiplexbetrieb verwendet werden. Zur Minimierung des Entzerrungsfehlers kann neben dem Verfahren der Minimierung des mittleren quadratischen

2

0 064 201

Entzerrungsfehlers, Minimierung des mittleren Entzerrungsfehlerbetrages oder andere Kriterien, wie z. B. bilden einer Regelgröße unter Verwendung einer reinen Vorzeichenkorrelation, verwendet werden. Die Filteranordnung kann z. B. durch Multiplexbetrieb eines schnellen, digitalen Multiplizierers zusammen mit Speichern und Addierern verwirklicht werden.

Die Erfindung wird nachfolgend anhand des in der Zeichnung dargestellten, bevorzugten Ausführungsbeispieles erläutert. Es zeigt

Figur 1   das Blockschaltbild eines Übertragungssystems mit einem automatischen und adaptiven, entscheidungsrückgekoppelten Entzerrer,

Figur 2   ein Ausführungsbeispiel zur Berechnung der Filterkoeffizienten nach dem Gradientenverfahren mit variablen Schrittfaktor,

Figur 3   einen möglichen Aufbau einer Schaltungsanordnung zur Berechnung des variablen Schrittfaktors und

Figur 4   den Verlauf des quadratischen Entzerrungsfehlers, aufgetragen über der Zahl der Iterationsintervalle.

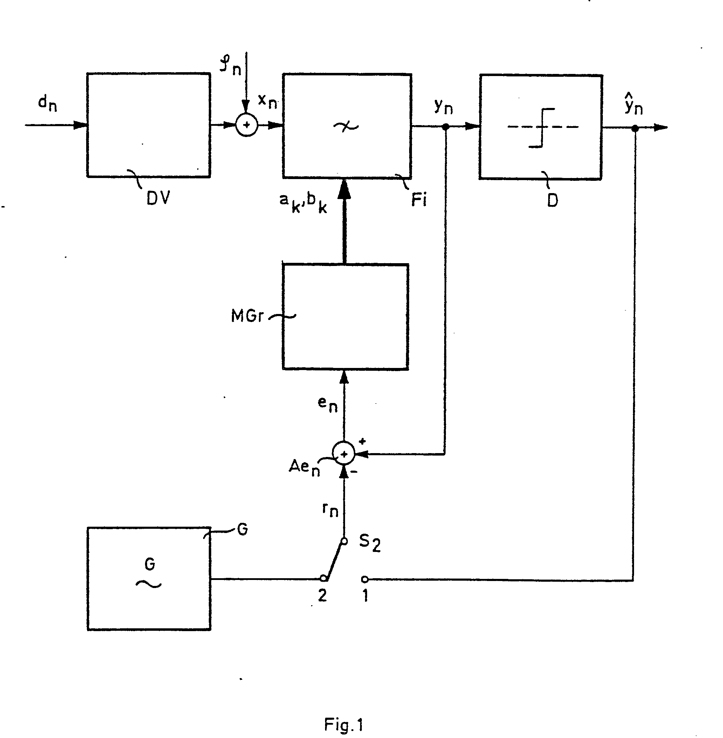

Fig. 1 zeigt den Aufbau eines automatischen und adaptiven, entscheidungsrückgekoppelten Entzerrers, wie dieser beispielsweise aus der bereits erwähnten Literatur stelle Seiten 16-18 bis 16-24, 1970 International Conference on Communications bekannt ist. Einem über eine Verbindungsleitung und mit einer Datenübertragungseinrichtung übertragenen Datensignal $d_n$ ist ein Rauschsignal $s_n$ additiv überlagert. Das Datenübertragungssystem ist beschreibbar durch ein zeitdiskretes Modell das blockschaltmäßig durch eine Einrichtung DV erfaßt werden soll und das die Verbindungsleitung und die Datenendeinrichtung, wie z. B. Modulatoren, Demodulatoren und Filter, enthält. Ein abgetastetes, verrauschtes Datensignal $x_n$ wird einem adaptiven, digitalen Filter Fi zugeführt. Am Ausgang des Filters Fi stellt sich ein Filterausgangssignal $y_n$ ein, welches einem Entscheider D und einem Addierglied $Ae_n$ zugeführt wird. Das Filter Fi enthält im allgemeinen einen rekursiven (in Fig. 1 nicht dargestellt) und einen nichtrekursiven Teil, deren Filterkoeffizienten iterativ nach dem Gradientenverfahren mit einem konstanten Schrittfaktor oder nach einem anderen Verfahren eingestellt werden.

Hierzu werden in einer mit MGr bezeichneten Einrichtung Stellsignale zur iterativen Änderung der Filterkoeffizienten $a_k$, $b_k$ ermittelt. Dabei wird ein als Entzerrugnsfehler $e_n$ bezeichneter Wert verwendet, der aus der Differenz des Filterausgangssignals $y_n$ und eines Referenzsignals $r_n$ gebildet wird.

Bei der automatischen Einstellung des Entzerrers wird vor den eigentlichen Daten ein spezielles, dem Empfänger bekanntes Signal gesendet (Präambel). Das Referenzsignal $r_n$ kann in diesem Fall auf der Empfangsseite mit einem Generator G erzeugt werden und ein Schalter $S_2$ befindet sich in einer Stellung 2. Man kann als Referenzsignal $r_n$ aber auch das Ausgangssignal $\hat{y}_n$ des Entscheiders D verwenden. Der Schalter $S_2$ befindet sich dann in der Stellung 1.

Bei der adaptiven Einstellung des Entzerrers wird keine Präambel gesendet. Das Referenzsignal $r_n$ wird durch $\hat{y}_n$ gebildet und der Schalter $S_2$ befindet sich in der Stellung 1. Für die Minimierung des mittleren, quadratischen Fehlers I gelten folgende Gleichungen :

$$e_n = y_n - r_n \tag{1}$$

$$I = E \{ e_n^2 \} \tag{2}$$

Für die iterative Berechnung der Filterkoeffizienten nach dem Gradientenverfahren kann ein koeffizientenvektor K, dessen Komponenten die einzustellenden Filterkoeffizienten $a_k$ und $b_k$ sind, nach folgender Gleichung bestimmt werden :

$$\underline{K}(i) = \underline{K}(i - 1) - \alpha(i - 1) \cdot 1/2 \cdot (\underline{\nabla}I)_{i-1} \tag{3}$$

Mit i ist das Iterationsintervall, mit $\underline{\nabla}$ I der Gradientenvektor und mit $\alpha(i - 1)$ der konstante oder variable Schrittfaktor bezeichnet.

Das erfindungsgemäße Verfahren zur Verringerung der Zahl der Iterationsintervalle i zur Berechnung des Minimums des quadratischen Entzerrungsfehlers I besteht darin, daß der Koeffizientenvektor K(i) von einem variablen Schrittfaktor $\alpha(i - 1)$ bestimmt wird.

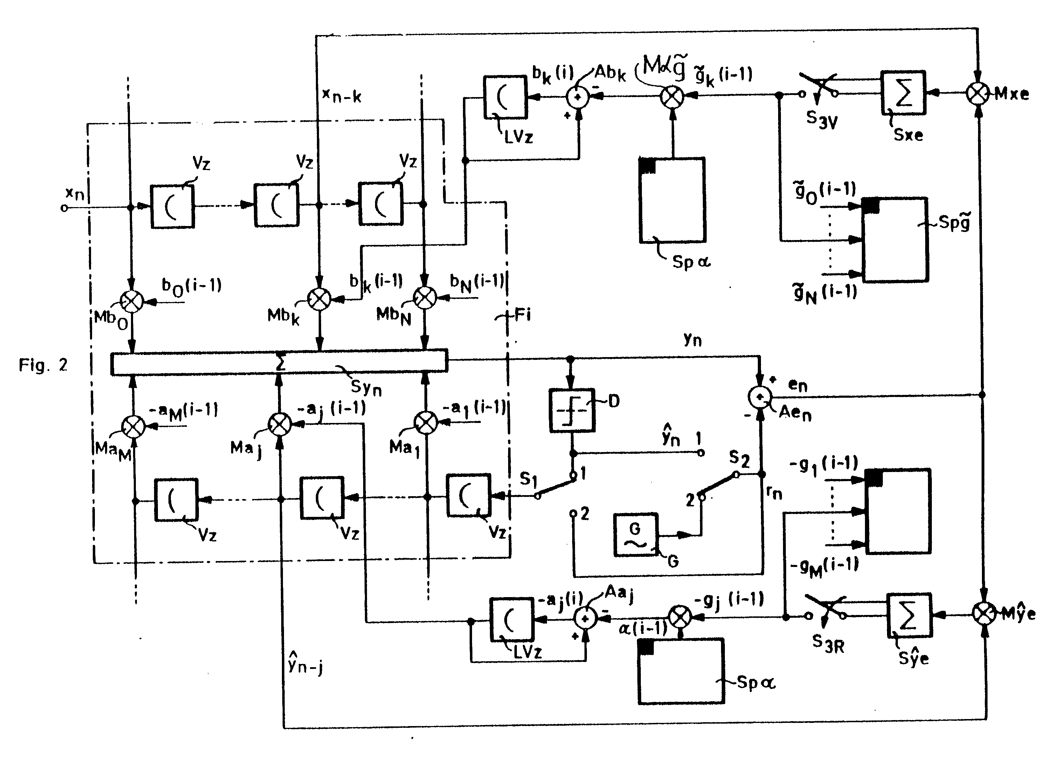

Fig. 2 zeigt für ein bevorzugtes Ausführungsbeispiel die Struktur eines automatischen und adaptiven, entscheidungsrückgekoppelten Entzerrers, wobei die iterative Einstellung der Filterkoeffizienten $a_j$ und $b_k$ nach dem Gradientenverfahren mit variablen Schrittfaktor $\alpha$ durchgeführt wird. Die in Fig. 2 gezeichnete Schaltungsanordnung befindet sich momentan im Zustand des Iterationsintervalls $(i - 1)$. Das Filter Fi enthält einen nichtrekursiven und einen rekursiven Teil mit jeweils einer Anordnung $Ma_j$ und $Mb_k$ zur Einstellung der Filterkoeffizienten $a_j$ und $b_k$. Das abgetastete, verrauchte Datensignal $x_n$ wird einer Anzahl in Kette geschalteter Verzögerungsglieder Vz zugeführt. Die Verzögerungsglieder Vz sind jeweils mit den Einrichtungen Mb zur Einstellung der Filterkoeffizienten b verbunden. Die in Klammer stehende Indizierung bedeutet das Iterationsintervall z. B. $(i - 1)$, während die tiefer gesetzte Indizierung angibt, welche der N + 1 bzw. M Filterkoeffizienten b bzw. a berechnet werden.

In Fig. 2 ist die Berechnung des k-ten Filterkoeffizienten $b_k$ bzw. des j-ten Filterkoeffizienten $a_j$ während des Iterationsintervalls $(i - 1)$ gezeigt. Aus einer Anzahl L von zeitdiskreten Abtastwerten werden

3

die Gradientenkoeffizienten $\bar{g}_k$ und $g_j$ für das Iterationsintervall (i — 1) berechnet. Dazu wird der Entzerrungsfehler $e_n$ in einem Multiplizierer Mxe mit dem verzögerten Abtastwert $x_{n-k}$ multipliziert und die Produkte werden aufsummiert. Nach der Summierung wird ein Schalter $S_{3v}$ geschlossen und der Gradientenkoeffizient $\bar{g}_k$(i — 1) wird sowohl einem Speicher Sp$\bar{g}$ als auch einem Multiplizierer M$\alpha\bar{g}$ zugeführt. Nun schließt sich die Ermittlung des variablen Schrittfaktors $\alpha$(i — 1) an, was anhand Fig. 3 später erklärt werden soll. Der berechnete Schrittfaktor $\alpha$(i — 1) befindet sich im Speicher Sp$\alpha$. Im Multiplizierer M$\alpha\bar{g}$ wird der Gradientenkoeffizient $\bar{g}_k$(i — 1) mit dem gespeicherten, variablen Schrittfaktor $\alpha$ verknüpft und einer Addierstelle Ab$_k$ zugeführt. Aus dem Filterkoeffizienten $b_k$(i — 1) und einem Korrekturwert, dem Multipliziererausgangssignal, wird die Differenz gebildet und diese wird nach dem Durchlaufen eines Verzögerungsgliedes LVz der Einrichtung Mb$_k$ zur Einstellung des Filterkoeffizienten $b_k$ zugeführt. Im gleich aufgebauten, rekursiven Teil der Filteranordnung Fi wird zur Einstellung der Filterkoeffizienten $a_j$ der Entzerrungsfehler $e_n$ mit dem entschiedene Entzerrerausgangssignal $\hat{y}_{n-j}$ verknüpft. Für den rekursiven Teil sind die Gradientenkoeffizienten mit $g_j$ bezeichnet. In Fig. 2 ist der Schalter $S_2$ enthalten, der bereits anhand Fig. 1 beschrieben wurde.

Im Gegensatz zur bekannten Entzerrerstruktur ist in Fig. 2 zwischen dem Entscheider D und einer Kette von Verzögerungsgliedern Vz im rekursiven Teil des Filters Fi erfindungsgemäß ein Schalter S1 vorgesehen. Befindet sich der Schalter S1 in der Schalterstellung 1, dann wird der Entzerrungsfehler $e_n$ nach der folgenden Gleichung berechnet :

$$e_n = \sum_{k=0}^{N} b_k \cdot x_{n-k} - \sum_{k=1}^{M} a_k \cdot r_{n-k} - r_n \qquad (4)$$

Für das mittlere Fehlerquadrat I nach (2) erhält man mit (4) die folgende Näherungsgleichung :

$$I \approx \underline{K}' \cdot \underline{Q} \cdot \underline{K} - 2 \cdot \underline{K}' \cdot \underline{V} + 0 \qquad (5)$$

Dabei bedeutet K' den transponierten Koeffizientenvektor, Q eine symmetrische Matrix, V einen Vektor mit Komponenten von Untermatrizen von Q und C eine Konstante. Das mittlere Fehlerquadrat I ist eine Funktion des Koeffizientenvektors K, welcher seinerseits eine Funktion des variablen Schrittfaktors $\alpha$ ist. Es läßt sich zeigen, daß für den variablen Schrittfaktor $\alpha$ folgende Gleichung gilt :

$$\alpha(i - 1) = \frac{1/2 \cdot (\underline{\nabla}I)_{i-1} \cdot 1/2 \cdot (\underline{\nabla}I)_{i-1}}{1/2 \cdot (\underline{\nabla}I)_{i-1} \cdot \underline{Q} \cdot 1/2 \cdot (\underline{\nabla}I)_{i-1}} \qquad (6)$$

Es kann gezeigt werden, daß der Nenner der obigen Gleichung (6) durch Ersetzen (d. h. Umschalten des Schalters S1) des Filter-Ausgangssignals y durch ein Hilfssignal $w_n$, welches in der Schalterstellung 2 des n Schalters S1 am Ausgang des Filters Fi auftritt, und unter Verwendung der gleichen Struktur für den Entzerrer berechnet werden kann. Dazu müssen in der Entzerrerstruktur die Filterkoeffizienten $b_k$ bzw. $a_j$ durch die Gradientenkoeffizienten $\bar{g}_k$ bzw. $g_j$ ersetzt werden. Befindet sich der Schalter S1 in der Stellung 2 dann wird der variable Schrittfaktor nach der Gleichung :

$$\alpha(i - 1) = \frac{1/4 \cdot |\underline{\nabla}I|^2_{i-1}}{E\{w_n^2\}_{i-1}} \qquad (7)$$

berechnet. Die zugehörige Schaltungsanordnung ist aus Fig. 3 ersichtlich.

Das Referenzsignal $r_n$, das abgetastete, verrauschte Datensignal $x_n$ und die Gradientenkoeffizienten $\bar{g}_k$ bzw. $g_j$ werden aus den zugehörigen Speichereinrichtungen Spr, Spx, Sp$\bar{g}$ und Spg ausgelesen. Der Zähler des variablen Schrittfaktors $\alpha$ wird nach Gleichung (7) dadurch bestimmt, daß die gespeicherten Gradientenkoeffizienten $g_j$ und $\bar{g}_k$ jeweils quadriert werden und daß aus diesen quadrierten Koeffizienten die Summe gebildet wird. Der inverse Nenner des Schrittfaktors $\alpha$ wird gemäß (7) dadurch bestimmt, daß das Hilfssignal $w_n$ quadriert, während einer Anzahl von Taktperioden aufsummiert und die Summe invertiert wird. Wie in Fig. 3 angegeben, wird ein Schalter S4 nach dem Aufsummieren der quadrierten Hilfssignale $w_n$ geschlossen. Zum leichteren Verständnis und zur Verdeutlichung der Übernahme der Multiplexstruktur aus Fig. 2 ist das digitale Filter Fi in Fig. 3 gestrichelt umrandet. Der so berechnete Schrittfaktor $\alpha$(i — 1) wird gespeichert und wie für Fig. 2 bereits erläutert zur Berechnung der Filterkoeffizienten $a_j$, $b_k$ während des Iterationsintervalles (i — 1) verwendet.

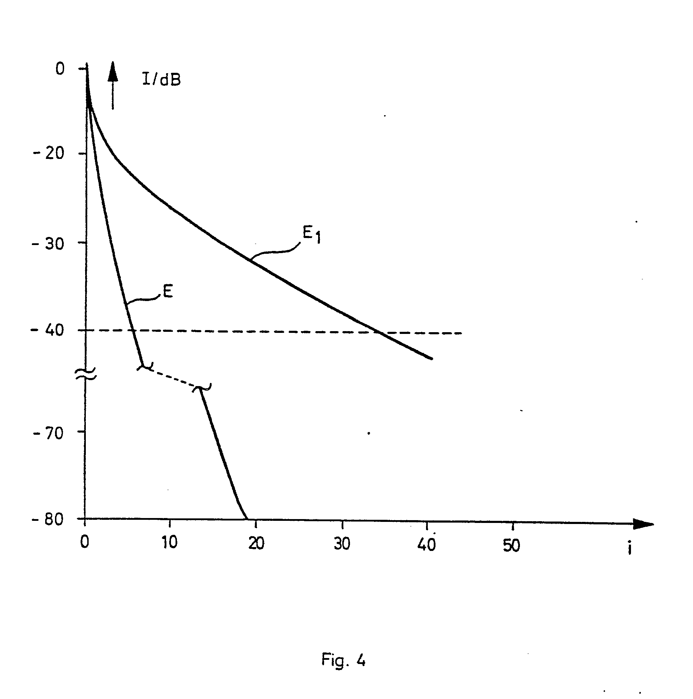

Um den Einfluß eines variablen Schrittfaktors $\alpha$ auf die Zahl der zur Entzerrung nötigen Iterationsintervalle i zu verdeutlichen, sind in Fig. 4 der Verlauf des quadratischen Entzerrungsfehlers I für einen automatischen und adaptiven, entscheidungsrückgekoppelten Entzerrer $E_1$, bei dem die Filterkoeffizienten nach dem Gradientenverfahren mit konstantem Schrittfaktor und für einen Entzerrer E, bei dem das erfindungsgemäße Verfahren verwendet wurde, einander gegenübergestellt. Die erhebliche Verringerung der Zahl der Iterationsintervalle zur Erreichung einer vorgegebenen Güte der Entzerrung ist dabei offensichtlich.

**Patentansprüche**

1. Verfahren zum Entzerren eines abgetasteten, verrauschten Datensignals $(x_n)$ in einem automatischen und adaptiven, entscheidungsrückgekoppelten Entzerrer, welcher ein Filter (Fi) mit einem rekursiven und einem nicht-rekursiven Teil enthält, welcher Filterausgangssignale $(Y_n)$ an einen Entscheider (D) liefert, bei dem ein Korrekturkriterium, insbesondere das des kleinsten mittleren Fehlerquadrats zwischen einem Referenzsignal $(r_n)$ und dem Filter-Ausgangssignal $(Y_n)$, abgeleitet wird und bei dem das Korrekturkriterium iterativ nach dem Gradienten-Verfahren minimiert und unter Verwendung eines variablen Schrittfaktors $(\alpha)$ zur Einstellung der Filterkoeffizienten $(a_j, b_k)$ verwendet wird, dadurch gekennzeichnet, daß mittels eines Schalters $(S_1)$, welcher im Rückkopplungszweig zwischen Entscheider (D) und rekursivem Teil angeordnet ist, eine Umschaltung im Rückkopplungszweig vorgenommen wird, wobei in der einen Schalterstellung (1) in den rekursiven Teil des Filters (Fi) das aus dem in dieser Schalterstellung (1) am Ausgang des Filters (Fi) auftretenden Filter-Ausgangssignal $(y_n)$ abgeleitete Entscheiderausgangssignal $(\hat{y}_n)$ und in der anderen Schalterstellung (2) in den Rückkopplungszweig das Referenzsignal $(r_n)$ eingespeist wird, und daß danach das Referenzsignal $(r_n)$ zusammen mit einem Hilfssignal $(w_n)$, welches in dieser Schalterstellung (2) am Ausgang des Filters (Fi) entsteht, zur Ermittlung des variablen Schrittfaktors $(\alpha)$ verwendet werden.

2. Verfahren nach Anspruch 1, dadurch gekennzeichnet, daß zu Beginn eines Iterationsintervalls (i) für die Zeit, in der sich der Schalter (S1) in der einen Stellung (1) befindet, die Gradientenkoeffizienten $(g_j, \bar{g}_k)$ nach dem Gradientenverfahren berechnet und abgespeichert werden, daß danach der Schalter (S1) in die andere Stellung (2) gebracht wird und die gespeicherten Gradientenkoeffizienten $(g_j, \bar{g}_k)$ der Einrichtung $(Mb_k, Ma_j)$ zur Ermittlung des Hilfssignals $(w_n)$ zugeführt werden, daß aus dem Hilfssignal $(w_n)$ und aus den gespeicherten Gradientenkoeffizienten $(g_j, \bar{g}_k)$ der variable Schrittfaktor $(\alpha)$ abgeleitet und gespeichert wird und daß mit dem variablen Schrittfaktor $(\alpha)$ und den gespeicherten Gradientenkoeffizienten $(g_j, \bar{g}_k)$ für jeden Filterkoeffizienten $(a_j, b_k)$ dessen optimale Einstellung während eines Iterationsintervalls (i) ermittelt wird.

3. Verfahren nach Anspruch 1, dadurch gekennzeichnet, daß die gespeicherten Gradientenkoeffizienten $(g_j, \bar{g}_k)$ jeweils quadriert werden, daß aus den quadrierten Gradientenkoeffizienten die Summe gebildet wird, daß das Hilfssignal $(w_n)$ quadriert, aufsummiert, und die Summe invertiert wird und daß das Inverse $(\alpha_{ne})$ der quadrierten und aufsummierten Hilfssignale $(w_n)$ mit der Summe $(\alpha_z)$ der quadrierten Gradientenkoeffizienten zur Ermittlung des variablen Schrittfaktors $(\alpha)$ multipliziert wird.

4. Verfahren nach Anspruch 3, dadurch gekennzeichnet, daß während einer Anzahl von Taktperioden das Hilfssignal $(w_n)$ aufsummiert wird und diese Summe über einen Schalter $(S_4)$ abfragbar ist.

5. Verfahren nach Anspruch 1, dadurch gekennzeichnet, daß gespeicherte Gradientenkoeffizienten $(g_j, \bar{g}_k)$ dem Betrage nach addiert werden, daß das Hilfssignal $(w_n)$ dem Betrage nach aufsummiert und die Summe invertiert wird und daß das Inverse der dem Betrage nach aufsummierten Hilfssignale $(w_n)$ mit der Summe der Beträge der Gradientenkoeffizienten zur Ermittlung eines Schrittfaktors $(\alpha)$ multipliziert wird.


**Claims**

1. A method of for equalizing a sampled, noisy data signal $(x_n)$ in an automatic and adaptive decision feedback equalizer comprising a filter (Fi) with a recursive and a non-recursive part supplying filter output signals $(y_n)$ to a decision (D), where a correction criterion is derived, particulary the minimum mean square error criterion between a reference signal $(r_n)$ and the filter output signal $(y_n)$, and where the correction criterion is minimized iteratively in accordance with the gradient method and is used for adjusting of the filter coefficients $(a_j, b_k)$ with a variable step factor $(\alpha)$, characterized in that by means of a switch $(S_1)$ arranged in the feedback path between the decision circuit (D) and the recursive part a change-over in the feedback path is effected such that, in one switch position (1), the decision circuit output signal $(\hat{Y}_n)$, derived from the filter output signal $(Y_n)$ occuring in this switch position (1) at the output of the filter (Fi), is stored in the recursive part of the filter (Fi), and in the other switch position (2), the reference signal $(r_n)$ is stored in the feedback path, and in that, thereafter, the reference signal $(r_n)$ is used together with an auxiliary signal $(w_n)$, occuring in this switch position (2) at the output of the filter (Fi) for determining the variable step factor $(\alpha)$.

2. A method as claimed in Claim 1, characterized in that, at the start of an iteration interval (i), the gradient coefficients $(g_j, \bar{g}_k)$ are calculated in accordance with the gradient method and stored for the time during which the switch (S1) is in said one position (1), in that thereafter the switch (S1) is brought into the other position (2) and the stored gradient coefficients $(g_j, \bar{g}_k)$ are supplied to the device $(Mb_k, Ma_j)$ for determining the auxiliary signal $(w_n)$, in that the variable step factor $(\alpha)$ is derived from the auxiliary signal $(w_n)$ and from the stored gradient coefficients $(g_j, \bar{g}_k)$ and is stored, and in that the optimal adjustment for each filter coefficient $(a_j, b_k)$ during an iteration interval (i) is determined with the variable step factor $(\alpha)$ and the stored gradient coefficience $(g_j, \bar{g}_k)$.

3. A method as claimed in Claim 1, characterized in that each of the stored gradient coefficients $(g_j,$

$\bar{g}_k$) is squared and the sum of all squared gradient coefficients is formed, in that the auxiliary signal ($w_n$) is squared, summed and the sum is inverted, and that in the inverse ($\alpha_{ne}$) of the squared and summed auxiliary signal ($w_n$) is multiplied by the sum ($\alpha_z$) of the squared gradient coefficients for determining the variable step factor ($\alpha$).

4. A method as claimed in Claim 3, characterized in that the auxiliary signal ($w_n$) is summed over a number of clock periods and that this sum can be read via a switch ($S_4$).

5. A method as claimed in Claim 1, characterized in that stored gradient coefficients ($g_j$, $\bar{g}_k$) are added together according to their value, in that the auxiliary signal ($w_n$) is summed according to its absolute value and the sum is inverted, and in that the inverse of the sum of the absolute values of the auxiliary signals ($w_n$) is multiplied by the sum of the absolute values of the gradient coefficients for determining a step factor ($\alpha$).

**Revendications**

1. Procédé pour l'égalisation d'un signal de données bruité échantillonné ($x_n$) dans un dispositif d'égalisation automatique et adaptatif à couplage en retour de décisions, qui comprend un filtre (Fi) avec une partie récursive et une partie non récursive, qui fournit des signaux de sortie de filtre ($y_n$) à un dispositif de décision (D), pour lequel un critère de correction, en particulier celui de la plus petite erreur quadratique moyenne entre un signal de référence ($r_n$) et le signal de sortie de filtre ($y_n$) est dérivé et pour lequel le critère de correction est minimisé de manière itérative suivant l'algorithme du gradient et est utilisé avec l'aide d'un facteur de pas variable ($\alpha$) pour l'ajustage des coefficients du filtre ($a_j$, $b_k$), caractérisé en ce qu'au moyen d'un commutateur ($S_1$) qui est disposé dans la branche de couplage en retour entre le dispositif de décision (D) et la partie récursive, on effectue une inversion dans la branche de couplage en retour, étant entendu que dans la première position (1) du commutateur, dans la partie récursive du filtre (Fi), le signal de sortie de dispositif de décision ($\hat{y}_n$) dérivé du signal de sortie de filtre ($y_n$) apparaissant dans cette position (1) du commutateur à la sortie du filtre (Fi) et dans l'autre position (2) du commutateur, le signal de référence ($r_n$) est introduit dans la branche de couplage en retour et qu'on utilise ensuite ensemble le signal de référence ($r_n$) et un signal auxiliaire ($w_n$), qui, dans cette position (2) du commutateur, apparaît à la sortie du filtre (Fi), pour déterminer le facteur de pas variable ($\alpha$).

2. Procédé suivant la revendication 1, caractérisé en ce qu'au début de l'intervalle d'itération (i), pendant le temps dans lequel le commutateur (S1) se trouve dans la première position (1), les coefficients du gradient ($g_j$, $\bar{g}_k$) sont calculés suivant l'algorithme du gradient et sont stockés, que le commutateur (S1) est ensuite amené dans l'autre position (2) et les coefficients du gradient stockés ($g_j$, $\bar{g}_k$) sont appliqués au dispositif ($Mb_k$, $Ma_j$) pour déterminer le signal auxiliaire ($w_n$), qu'à partir du signal auxiliaire ($w_n$) et des coefficients du gradient stockés ($g_j$, $\bar{g}_k$), le facteur de pas variable ($\alpha$) est dérivé et stocké et qu'à l'aide du facteur de pas variable ($\alpha$) et des coefficients du gradient stockés ($g_j$, $\bar{g}_k$), pour chaque coefficient du filtre ($a_j$, $b_k$), l'ajustage optimal pendant un intervalle d'itération (i) est déterminé.

3. Procédé suivant la revendication 1, caractérisé en ce que les coefficients du gradient stockés ($g_j$, $\bar{g}_k$) sont chaque fois élevés au carré, que les coefficients du gradient élevés au carré sont sommés, que le signal auxiliaire ($w_n$) est élevé au carré, sommés, que le signal auxiliaire ($w_n$) est élevé au carré, sommé et la somme inversée et que l'inverse ($\alpha_{ne}$) des signaux auxiliaires ($w_n$) élevés au carré et sommés est multiplié par la somme ($\alpha_z$) des coefficients du gradient élevés au carré pour déterminer le facteur de pas variable ($\alpha$).

4. Procédé suivant la revendication 3, caractérisé en ce que pendant un certain nombre de périodes d'horloge, le signal auxiliaire ($w_n$) est sommé, cette somme pouvant être demandée par l'intermédiaire d'un interrupteur ($S_4$).

5. Procédé suivant la revendication 1, caractérisé en ce que des coefficients du gradient stockés ($g_j$, $\bar{g}_k$) sont additionnés en valeur absolue, que le signal auxiliaire ($w_n$) est sommé en valeur absolue et la somme inversée et que l'inverse des signaux auxiliaires ($w_n$) sommés en valeur absolue est multiplié par la somme des valeurs absolues des coefficients du gradient pour déterminer un facteur de pas ($\alpha$).

Fig.1

Fig. 2

0 064 201

Fig. 3

Fig. 4